(19)

Europäisches Patentamt
European Patent Office
Office européen des brevets

(11) **EP 2 689 510 B1**

(12) **EUROPEAN PATENT SPECIFICATION**

(45) Date of publication and mention
of the grant of the patent:
**23.09.2015 Bulletin 2015/39**

(21) Application number: **12760704.2**

(22) Date of filing: **06.02.2012**

(51) Int Cl.:
**H02J 3/00** *(2006.01)*    **H02J 3/12** *(2006.01)*

(86) International application number:
**PCT/NO2012/050017**

(87) International publication number:
**WO 2012/128638 (27.09.2012 Gazette 2012/39)**

(54) **METHOD AND SYSTEM FOR VOLTAGE REGULATION IN A POWER DISTRIBUTION NETWORK**

VERFAHREN UND SYSTEM ZUR SPANNUNGSREGELUNG IN EINEM STROMVERSORGUNGSNETZ

PROCÉDÉ ET SYSTÈME DE RÉGULATION DE TENSION DANS UN RÉSEAU DE DISTRIBUTION D'ÉLECTRICITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2011  NO 20110423**

(43) Date of publication of application:
**29.01.2014  Bulletin 2014/05**

(73) Proprietor: **Trönderenergi Nett AS
7496 Trondheim (NO)**

(72) Inventor: **FORSETH, Arnt, Magnar
N-7496 Trondheim (NO)**

(74) Representative: **Curo AS
Industriveien 53
7080 Heimdal (NO)**

(56) References cited:
**US-A1- 2009 265 042    US-A1- 2009 265 042
US-A1- 2010 191 389**

## Description

The present invention relates to a method and a system for regulating the voltage in a power distribution network, according to the preamble of claim 1 and 5, respectively.

## Background

At operation of distribution networks for electrical energy, it is often a problem that the voltage supplied to the individual subscriber varies considerably. This arises due to that it over time can be large variations in the power consumption. Such variations in energy consumption, and thus in the electrical voltage in the electrical outlet of the consumer, generally arise as a consequence of variations in the power consumption during the day; normally it is, for example, much higher consumption in the daytime than during the night. Likewise, variations will arise in the energy consumption as a consequence of climatic variations.

In the northern areas there will be large variations in the power consumption over the year as the power consumption in periods with cold weather will be high due to increased power consumption for heating.

Likewise, in hot and tropical areas it will generally be a large increase in the power consumption in hot periods as a consequence of increased power consumption for air conditioning.

At distribution of electrical energy a voltage drop (U, measured in Volt) arises in the cable which is equal to the product of electrical resistance (R, measured in Ohm) in the cable and the electrical amperage (I, measured in Ampere) in the cable. The voltage drop or voltage loss in the cable can thus be expressed as the product of electrical resistance (R) and electrical current (I):

$$U \text{ (Volt)} = R \text{ (Ohm)} * I \text{ (Ampere)}$$

In addition there is a loss which increases with the voltage, so-called "iron loss" in the transformer. This is however lower than the loss which is described above.

In addition to this there will be a voltage drop in the power distribution network, i.e. it also is an energy loss in the cables which provide the electrical energy to the consumer. This loss constitutes the product of electrical resistance in the distribution cable multiplied with the amperage in the cable in the second power, i.e.:

$$\text{loss} = R * I^2,$$

or

$$\text{loss} = U * I.$$

It is also such that if electrical energy is distributed at high voltage, the electrical amperage in the cable becomes corresponding lower. The loss ($R*I^2$) becomes naturally low if the amperage I, is low, as I constitutes a part of the equation for the loss in the second power. In practice electrical energy is distributed over long distances to and inside cities and communities at very high voltage levels. In (north) Europe this can vary and can, for example, be 66 KV (66 000 Volt). From this voltage level the voltage is reduced in electrical power transformers (transformer stations) down to medium-voltage, for example 12 kV, before the electrical energy is distributed to a number of distribution transformers connected to the power transformer. These distribution transformers are arranged in the local residential areas or in local areas with business activity, so that they are arranged as close as possible to the most consumers of the electrical energy. From these distribution transformers, which there are many of in the neighborhood of the subscribers, the energy is distributed to the subscribers, but first after the voltage is transformed further down to such a level that the subscribers can make use of the energy (typically 240 V in Europe, and typically 110V in US, etc.).

As a consequence of the electrical energy consumption varying over time, as described above, the voltage from the power transformers down to the distribution transformers could also vary. This will in turn result in a variation in the voltage level which is delivered to the subscribers from the distribution transformers. To solve this there are installed devices or controllers in the power transformers which makes it possible to raise or lower the voltage level which is delivered from the power transformers to the distribution transformers, as the voltage level in these will go up and down with the consumption level. Such regulation is normally done manually, and presumes that there is also installed a system for measuring the voltage in the distribution transformers, which there normally is.

However, modern power distribution networks for electrical energy are highly complex, so that manual regulation only to a small extent can be used for compensating for increased energy consumption, and thus neither can be used effectively to raise the voltage level in the power distribution network to desired or correct level. The danger by such manual regulation is, among others, that the voltage in some cases becomes too high. This will in turn possibly result in many negative consequences, among others, that electrical apparatus for a consumer can be exposed to higher voltage than which is allowed, and thus be damaged. In a worst case scenario, too high voltage level may result in overheating of equipment and plant, and thus result in fire.

The result of such lacking effective regulation of the voltage level in power distribution networks is that the voltage level often will be too low in periods of high energy consumption. This typically means that it on the northern hemisphere will be lower voltage than desirable in the winter moths. This will again result in that the power consumption is transported to the subscribers at too low voltage in relation to what is desirable. As a result of this the energy losses in the power distribution network partly become considerably higher than will be the case if one had a system for regulating the voltage, i.e. for controlling the distribution transformers, so that the voltage level to the end customers/subscribers is stable at a desired level the entire year, regardless of how high or low the energy consumption is.

There have prior been made some attempts to solve this problem, but they have not shown to be satisfying.

From CN101604843A it is known a method for reduction line loss by regulating the continuous voltage of a distribution network.

US 2009265042A describes a system and method for voltage regulation in an energy distribution network.

In JP2008228428 A it is disclosed a distribution system, device and method for determination of optimal set point for the voltage output from the power transformers.

US 20100191389 A1 concerns a method for voltage regulation in a distribution network where a step in the regulation process includes considering the state of the distribution network.

From US 2009/265042 it is known a system and method for providing voltage regulation in a power distribution system which is arranged for providing appropriate voltages for customers.

None of the above-mentioned solutions provide a satisfying solution of the regulation of the voltage in the distribution network, as they are not capable of taking into consideration the construction, operational characteristics and physical parameters of the network and they thus not provide optimal regulation of the voltage level. By this follows that the systems described in the patent publications above are complex, requires many measuring points at the secondary side of the distribution transformers, and are not as effective and cost saving as desirable.

## Object

The main object of the present invention is to provide a method and system which solves the above-mentioned problems of prior art.

Another object of the present invention is to provide a method and system which can ensure optimal voltage independent of the load of the distribution network.

It is further an object of the present invention to provide a method and system which minimize the losses in the distribution network

It is further an object of the present invention to take into consideration the construction, operational characteristics and physical parameters of the distribution network in connection with the regulation of the optimal voltage, by performing analyses and calculations of the structure of the distribution network with the purpose of finding the point where the voltage level will always be highest.

It is further an object of the present invention to optimize the operation of the distribution network by means of so-called nonlinear programming for therethrough to make sure that the voltage in the distribution network will always be at an upper limit value in the point of the distribution grid with the highest voltage.

Finally, it is an object of the present invention to provide a method and system for achieving optimal regulation of the voltage at the secondary side of the distribution transformers, based on only one or a few measuring points, and lower complexity, need for less equipment, which will result in lower costs both for construction and operation of the regulation system.

## The invention

A method according to the invention is described in claim 1. Preferable features of the method are described in claims 2-4.

A system according to the invention is described in claim 5. Preferable features of the system are described in claims 6-10.

The present invention solves the above-mentioned problems and lacks of prior art by combining knowledge of the construction, operational characteristics and physical parameters of the network, with an automatic control system. By this it will be possible to control the distribution of electrical energy so that an even voltage level in the distribution network is achieved for all practical purposes, so that the disadvantages as described above with regard to voltage loss and energy loss can be avoided.

As mentioned, there is a presumption for optimal regulation that one knows the construction, operational characteristics and physical parameters of the distribution network. It is further a presumption that one identifies the one or more distribution transformers in the distribution network having highest voltage, i.e. which distribution transformer which has highest voltage at the secondary side of distribution transformers connected to the actual power transformer, or the actual power transformers in cases where they are parallel connected. One can find this distribution transformer by performing analyses of measuring data or by calculations.

The first step will thus be to perform a detailed analysis of the distribution network. For each distribution transformer in the distribution network is an analysis performed to find which distribution transformer or transformers connected to the power transformer, which have highest voltage at the secondary side of the distribution transformer during operation. In practice it turns out that the distribution transformers under a power transformer consistently have a tendency to have different voltage levels. This level is given by physical laws, primarily distances, length and cross section of the cable which determines electrical resistance, and energy consumption in the sub-region which the individual distribution transformer is connected to. Due to the "law of large numbers", the percentual variation in energy consumption in the different sub-regions, i.e. for the different distribution transformers are highly similar. The experiences are thus that one or a couple of such distribution transformers always have a higher voltage level than the other distribution transformers which are connected to the same power transformer.

In this way one can identify this point of the distribution network, i.e. the distribution transformer with highest voltage at the secondary side.

After the distribution transformer or transformers are identified, the next step will be to arrange means for measuring the voltage level at the secondary side of the chosen distribution transformer(s), i.e. the distribution transformer(s) being identified as the distribution transformer(s) under the actual power transformer, with highest output voltage.

By this one will achieve a measuring signal which can be used for controlling the entire network distribution with thought of raising or lowering, possibly maintaining constant output voltage at the secondary side of the power transformer, in such a way that one at all time maintains the desired and constant voltage level at the secondary side of chosen distribution transformer(s).

The desired voltage level at the secondary side of the chosen distribution transformer(s) will thus be the highest voltage level which is delivered to subscribers in the region which is subordinated or receiving electrical energy from the actual power transformer.

For all other distribution transformers, i.e. at the secondary side of all the other distribution transformers, the voltage level will be lower than the voltage level for the chosen distribution transformer(s) which is/are used for regulating the output voltage of the power transformer, as the one with highest voltage was selected as a reference for the measuring signal.

With this system the distribution voltage, i.e. the voltage level at the secondary side of the distribution transformers, can be held approximately constant, independent of the load or consumption of electrical energy of the customers which are connected to the distribution transformers under the actual power transformer.

In this way one can control an entire distribution network in a plain and effective manner by regulating the output voltage of the power transformer. By that one use the distribution transformer with highest voltage one will be sure that the consumers never are provided with too high voltage.

To be able to carry out this there is arranged a control unit at the power transformer, which control unit is provided with means and/or software for controlling the output voltage of the power transformer.

In principle it is sufficient to have one means for measuring the voltage at the secondary side of the chosen distribution transformer, but preferably are several measuring means arranged at several chosen distribution transformers, i.e. at the secondary side of the distribution transformers. This is done with regard to redundancy so that safety is ensured if there should be a malfunction in a measuring instrument or if there are a couple or more distribution transformers which have similar voltage level. Of course, several measuring means can be arranged at the chosen distribution transformer, so that one always is ensured a measuring signal.

If the distribution network for some reasons is changed, this will result in that the setup of the system must be changed. If the change in a region or sub-region under a distribution transformer is of such a kind that characteristic operational data for the distribution network is changed, a new analysis as described above must be performed. This could arise if, for example, the energy consumption in a sub-region is substantially changed as a consequence of increased energy requirements in the actual sub-region. This can happen if there are major developments which are connected to the existing distribution transformer, or possibly that there is built a new distribution transformer which is connected to the same power transformer.

An alternative to the above mentioned controlling of the voltage of the distribution network can also be carried out by utilizing measuring values from each of the distribution transformers in the distribution network, or even by measuring the voltage level at each customer which is connected to the actual distribution network. This will require a large amount of measuring instruments for controlling the energy distribution. Even in a smaller city, for example, with 200.000 citizens, this will require many thousands of measuring instruments for controlling the voltage level of the distribution network. In addition the regulation system itself will be highly complicated with possibilities for many errors.

The above described way with choosing one distribution transformer which can be used as a reference for controlling the total distribution network is thus highly cost-effective and provides a plain regulation system with low costs, both as regards investments and maintenance costs.

Further preferable features and details of the present invention will appear from the following example description.

**Example**

The invention will below be described in further detail with references to the attached drawings, where:

Figure 1 shows an example of a typical distribution network,
Figure 2 shows an example of a distribution network where the present invention is arranged, and
Figure 3 shows an example of a voltage flow through a year, with and without regulation according to the present invention.

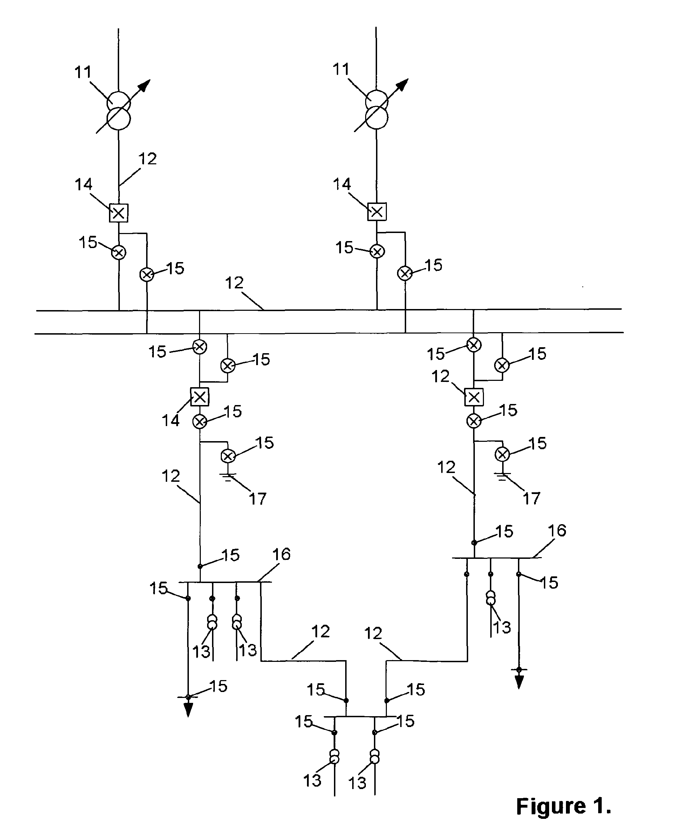

Reference is now made to Figure 1 which shows a typical distribution network. A distribution network includes one or more power transformers 11 which via distribution lines 12 supply voltage to distribution transformers 13 which in turn supply consumers/subscribers (not shown). The distribution network is at suitable locations provided with main switches 14 for connecting and disconnecting entire distribution lines 12, and switches 15 for connecting or disconnecting parts or branches of a distribution line 12. The switches 14, 15 ensure that the distribution network can be operated even if there is an error in the branches or parts of the distribution network, and that the safety is ensured if there are errors in the network. In a distribution network are usually also distributing bus-bars 16, and earthing points 17.

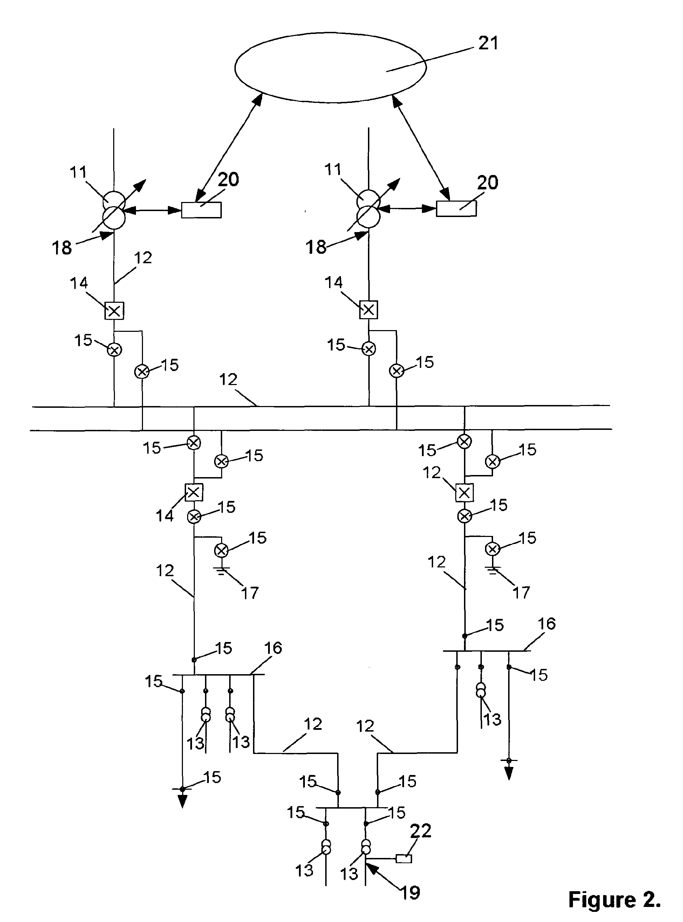

Reference is now made to Figure 2 which shows the distribution network in Figure 1 where the present invention is arranged. As mentioned introductorily, the object of the present invention is to regulate output voltage 18 of the power transformer 11 with the purpose of maintaining constant voltage, independent of load, at the secondary side 19 of distribution transformers 13, so that the consumers experience approximately constant voltage at all time. It is desirable to have the voltage at the secondary side 19 of the distribution transformers 13 as high as possible in accordance with the requirements of delivery, where it in Europe usually is maximum 250 V, while it in other countries, for example, can be maximum 115 V. Highest possible voltage combined with actual load result in minimum current heat loss in the distribution network. The lower the general voltage level in the distribution network is, the more important it is to maintain the voltage constant and also as close to the highest allowed maximum voltage as possible, as heat loss=$R*I^2$. With low voltage the current will be high and the heat loss will be higher if the voltage deviates from the maximum allowed voltage level.

To achieve this the invention includes a control unit 20, which is arranged in connection with the power transformer 11, which control unit 20 is arranged to change the output voltage of the power transformer 11, i.e. the voltage at the secondary side 18, dynamically by automatic remote control or manually from a control center 21. The voltage at the secondary side 18 will, for example, for a 60 kV power transformer 11, usually be 11/22 kV.

It should be mentioned that the control unit 20 can be arranged both in a control center 21 and in connection with the actual power transformer 11.

The invention further includes means 22 for continuous measurement of real-time voltage at the secondary side 19 of at least one chosen distribution transformer 13 per power transformer 11.

The means 22 for measuring real-time voltage is arranged for communication with the control unit 20, either directly or via, for example, the control center 21.

Arrangement of means 22 for measurement of real-time voltage is preferable, but not necessary. The control unit 20 can instead be arranged for calculating the voltage at the secondary side 19 of the chosen distribution transformer 13 based on a predefined voltage function and predefined parameters. This will however result in a more insecure regulation and not completely optimal voltage regulation as one does not know the actual voltage value. The control unit 20 can be arranged to handle several power transformers 11 which distribute their own distribution line, but preferably controls only one power transformer 11 at time. In cases where the control unit 20 control several power transformers 11 it is preferably arranged in connection with a control center 21.

The control unit 20 for regulation of the voltage is provided with a voltage regulation function. The object of the voltage regulation function is, as mentioned, to control the voltage 18 at the secondary side 18 of the power transformer 11 so that the measured voltage(s) at the secondary side 19 of underlying distribution transformers 13 at each time is kept as close to desired set point/desired value (e.g. 240 V/110V) as possible.

One needs to know the state of the distribution network for this to work. The connection state in the distribution network can vary, so that a distribution transformer 13 can be supplied from different power transformers 11 at different periods of time. Basically, the regulation only works when the distribution network is in normal connection state and is provided with parameters for this.

If an error state occurs the control unit 20 is preferably arranged to disconnect the voltage regulation function and instead setting the set voltage to a predefined safety state, i.e. a voltage which is defined as safe for the distribution network. Here can also fixed compensation of line loss out from the power transformer be used, a solution which is known in the industry.

If the distribution network changes supply from one power transformer 11 to another, the system can be arranged to change to regulation of that one. This presumes that the system is provided with separate parameters for that one, as it is not sure that it is the same distribution transformer 13 which provides the highest voltage at the secondary side when the distribution network is supplied from another power transformer 11. If it is not the same power transformer this requires that it is also arranged means 22 for measuring voltage at the secondary side 19 of that distribution transformer 13 when the distribution network is supplied from the actual power transformer 11.

The voltage regulation itself presumes a controllable power transformer 11, for example, in the form of a tap changer which can be controlled by the control unit 20, preferably remote controlled.

The tap changer of the power transformer 11 can be controlled in several ways. One first way is by that the control unit 20 is arranged at a control center 21 which through commands control the tap changer of the power transformer 11 up or down. It is especially favorable for power transformers 11 which do not have a regulator function locally.

Another solution is that the control unit 20 sends a set point (numerical value) which represents a desired voltage of the secondary side 18 of the power transformer 11. A regulator in a local control unit of the power transformer 11 then controls the tap changer so that desired secondary voltage is achieved.

The system further includes an interface, either as a separate interface or as an interface integrated in other interfaces existing in connection with, for example, a control center 21.

From the above-mentioned interface an operator can control Auto/Manual mode of the voltage regulation function. The interface can be arranged to show several distribution lines which have their own power transformer 11, and there is then preferably an Auto/Manual mode for each of these.

Auto/Manual mode in this connection means the following:

- In automatic mode the voltage function controls the voltage at the secondary side 18 of the actual power transformer 11 if it finds it necessary. This means accordingly that the voltage regulation function actively can send commands to the power transformer 11.

- In manual mode the voltage regulation function does not send commands for controlling the power transformer 11, but instead alerts the operator by a dialog window in the interface about which controls which would have been performed if the function operated in automatic mode. This means accordingly that the decision if active control should be performed or not is handed over to the operator. Manual mode will also be useful in a phase where one desires to test automatic voltage regulation in a controlled/safe manner. To prevent that the operator constantly is receiving new/repeated alerts about the regulation, it should be possible to stop the alerts permanently or temporarily. Examples of when an operator should be alerted are every time the function finds that it is necessary to regulate, and if there has been some time since the last alert.

It could also be preferable that the system is provided with means for logging data and states, including regulations, internal information/events, etc. This logging is performed irrespective of the function operating in automatic or manual mode. The logging makes it possible to perform analysis of what and why something happened in retrospect. All measured values, set point values, etc., can thus be analyzed in retrospect.

The analyses can be used to optimize the distribution network gradually as one gain experience about the distribution network, voltage levels, history, etc. With logging one can also check and fine-tune the controlling of the voltage regulation. For this the control unit can be provided with a self-learning function, which based on historical data fine-tunes the regulation of the power transformer 11.

It is further an advantage that the system includes safety means (not shown), e.g. in the form of interlockings, and that the system is arranged for quality checking before voltage regulation is performed, including e.g. checking interlockings before regulation is performed. This to ensure that decision of controlling can not be performed on incorrect basis. Interlockings are defined per power transformer 11 and controlled by the control unit 20.

Examples of interlockings can be:

- distribution transformer(s) 13 with voltage measuring have normal connection state,
- the value of all input variables which are used in connection with the voltage regulation are within set intervals,
- actual secondary voltage and tap changer position must allow regulation up or down (minimum/maximum value),
- it is also an advantage with an upper defined limit for how much the secondary voltage can be regulated per time unit (rate),
- all information being necessary for the regulation must be available, i.e. if communication with the means 22 for voltage regulation of the chosen distribution transformer(s) 13 are not available, the voltage regulation shall not be performed.

In this way interlockings will block for voltage regulation at indications of something being wrong. The control unit 20 will then preferably set the power transformer 11 in a safety mode with safe voltage values and alerting an operator so that the error can be checked.

A method for regulating voltage according to the invention can be summarized in the following steps:

a) checking the state of the distribution network,
b) calculating voltage or acquiring voltage measurements from the secondary side 19 of the chosen distribution transformer(s) 13,
c) calculating deviation between desired voltage and measured voltage at the secondary side 19 of the chosen distribution transformer(s) 13, and settings for the power transformer 11,
d) regulating the power transformer 11 so that desired voltage is achieved at the secondary side 19 of the chosen distribution transformer(s) 13,
e) repeating the steps a)-d) at predefined intervals.

The above mentioned steps must be repeated for each power transformer 11 in the distribution network. In this way the control unit 20 can control an arbitrary number of power transformers 11.

Step a) includes, for example, to check if there are interlockings blocking the voltage regulation or if there are other error states in the distribution network as described above.

Step b) includes calculating the voltage at the secondary side of one or more chosen distribution transformers 13 or acquiring measuring values from measuring means 22, e.g. a voltmeter, which is arranged at the secondary side 19 of one or more chosen distribution transformers 13. In cases where several measurements are acquired from several measuring means 22, the voltage regulation can e.g. be performed based on the distribution transformer 13 having highest measured voltage.

Step c) includes calculating the deviation between desired voltage and measured voltage at the secondary side 19 of the chosen distribution transformer(s) 13, and calculating the set voltage for the power transformer 11, i.e. which voltage the secondary side 18 of the power transformer 11 must have for the desired voltage to be achieved at the secondary side 19 of the chosen distribution transformer(s) 13.

Step d) includes regulating the power transformer 11 so that desired voltage at the secondary side of the distribution transformer(s) 13 is/are achieved. This includes, for example, controlling a tap changer of the power transformer 11 so that the output voltage of the power transformer 11 is adjusted so that one in turn achieves the desired voltage at the secondary side 19 of the distribution transformer(s) 13. As mentioned above, this can be done in several ways, depending on if the power transformer 11 is provided with a local control function or if it is controlled by an external unit, such as a control center 21. This step can be performed both manually and automatically.

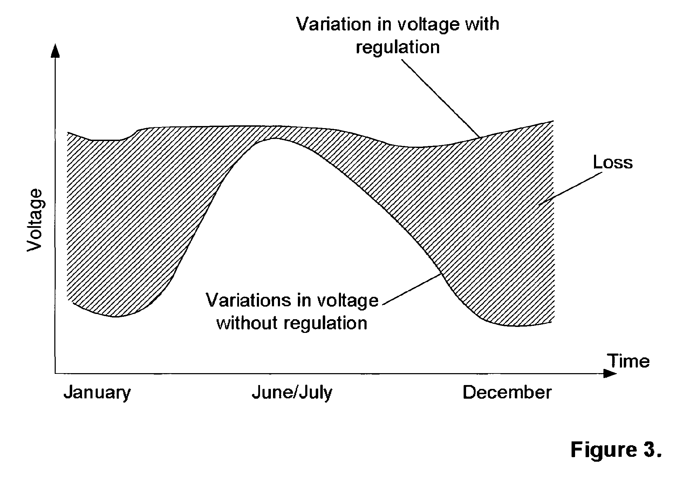

Reference is now made to Figure 3 which shows an example of voltage flow through a year, with and without regulation according to the invention. The two curves show the variation at the secondary side 19 of a chosen distribution transformer 13 from January (cold climate, northern hemisphere), through the summer June/July with comfortable climate and to December, where it again is cold climate. As one can see, one will by means of the present invention maintain approximately a constant voltage level at the secondary side 19 of the distribution transformer 13, while one without the present invention will have large variations as a consequence of the power consumption being high in cold periods of the year in relation to less cold periods of the year. As the shaded area in the figure shows, this will result in a considerable loss due to low voltage.

**Modifications**

Basically, the above described method and system are used to control one distribution line at time, i.e. distribution lines which are supplied from one power transformer.

Basically, it is sufficient with one voltage measurement from one chosen distribution transformer, but one can alternatively use voltage measurements from several chosen distribution transformers, and one can instead of using the measurement from one use the highest from a selection of distribution transformers or an average value for several chosen distribution transformers.

**Claims**

1. Method for regulating voltage in a distribution network including at least one power transformer (11), distribution lines (12), switches (14,15) and distribution transformers (13), **characterized in that** the method includes the following steps:

    a) checking the state of the distribution network,
    b) performing a detailed analysis of the distribution network for each distribution transformer (13) to find which distribution transformer(s) (13), connected to the power transformer (11), which has highest voltage at the secondary side (19) of the distribution transformer (13) during operation,
    c) calculating voltage or acquiring voltage measurements from the secondary side (19) of the chosen distribution transformer(s) (13),
    d) calculating deviation between desired voltage and measured voltage at the secondary side (19) of the chosen distribution transformer(s) (13), and settings for the power transformer (11),
    e) regulating the power transformer (11) so that desired voltage at the secondary side (19) of the chosen distribution transformer(s) (13) is achieved,
    f) repeating the steps a)-e) at predefined intervals.

2. Method according to claim 1, **characterized by** that step a) includes checking if there are interlockings blocking the voltage regulation or if there are other error states in the distribution network.

3. Method according to claim 1, **characterized by** that step c) includes calculating the voltage at the secondary side (19) of one or more chosen distribution transformers (13) or acquiring measuring values from measuring means (22) for voltage measurement arranged at the secondary side (19) of one or more chosen distribution transformers (13).

4. Method according to claim 1, **characterized by** that step d) includes calculating the deviation between desired voltage and measured voltage at the secondary side (19) of the chosen distribution transformer(s) (13), and calculating set voltage for the power transformer (11) for achieving desired voltage at the secondary side of the chosen distribution transformer(s) (13).

5. System for regulating voltage in a distribution network including at least one power transformer (11), distribution lines (12), switches (14, 15) and distribution transformers (13), where measuring means (22) is arranged at the secondary side (19) of at least one chosen distribution transformer (13) for reading voltage, and a control unit (20) provided with a voltage regulation function for regulating the power transformer (11) so that desired voltage is achieved at the secondary side (19) of the chosen distribution transformer(s) (13), **characterized in that**:

- the measuring means (22) are arranged in connection with the distribution transformer(s) (13) having highest voltage at the secondary side (19) during operation,
- the control unit (20) is arranged for calculating the voltage at the secondary side (19) of one or more chosen distribution transformers (13) or acquire measuring values from measuring means (22) for voltage measurement arranged at the secondary side (19) of one or more chosen distribution transformers (13), and
- the control unit (20) is arranged for calculating the deviation between desired voltage and measured voltage at the secondary side (19) of the chosen distribution transformer(s) (13), and calculating set voltage for the power transformer (11) to achieve desired voltage at the secondary side (19) of the chosen distribution transformer(s) (13).

6. System according to claim 5, **characterized in that** the control unit (20) is arranged to check the state of the distribution network, including checking if there are interlockings blocking the voltage regulation or if there are other error states in the distribution network.

7. System according to claim 5, **characterized in that** the system includes means for logging data and states, including all regulations, internal information/events, and measuring values, set point values and/or voltage levels.

8. System according to claim 5, **characterized in that** the system includes an interface, either as a separate interface or as an interface integrated in other interfaces existing in connection with, for example, control centers (21).

9. System according to claim 5, **characterized in that** the control unit (20) is arranged for controlling a tap changer of the power transformer (11) for regulating the voltage at the secondary side (18) of the power transformer (11).

10. System according to claim 5, **characterized in that** the control unit (20) and the measuring means (22) are arranged for internal communication, either directly or via a control center (21).

## Patentansprüche

1. Verfahren zur Spannungsregelung in einem Versorgungsnetz mit mindestens einem Leistungstransformator (11), Verteilungsleitungen (12), Schaltern (14, 15) und Verteilungstransformatoren (13), **dadurch gekennzeichnet, dass** das Verfahren folgende Schritte beinhaltet:

a) Prüfen des Zustandes des Versorgungsnetzes,
b) Durchführen einer detaillierten Analyse des Versorgungsnetzes für jeden Verteilungstransformator (13), um festzustellen, welche(r) Verteilungstransformator(en) (13), an den Leistungstransformator (11) angeschlossen, die höchste Spannung auf der Sekundärseite (19) des Verteilungstransformators (13) während des Betriebs aufweist,
c) Berechnen einer Spannung oder Erfassen von Spannungsmessungen von der Sekundärseite (19) des/der gewählten Verteilungstransformators/-transformatoren (13),
d) Berechnen einer Abweichung zwischen gewünschter Spannung und gemessener Spannung auf der Sekundärseite (19) des/der gewählten Verteilungstransformators/- transformatoren (13) und Einstellungen für den Leistungstransformator (11),
e) Regeln des Leistungstransformators (11), damit die gewünschte Spannung auf der Sekundärseite (19) des/der gewählten Verteilungstransformators/-transformatoren (13) erreicht wird,
f) Wiederholen der Schritte a)-e) in vorgegebenen Intervallen.

2. Verfahren nach Anspruch 1, **dadurch gekennzeichnet, dass** Schritt a) das Prüfen beinhaltet, ob Verriegelungen vorhanden sind, die die Spannungsregelung blockieren, oder ob sonstige Fehlerzustände im Versorgungsnetz vorliegen.

3. Verfahren nach Anspruch 1, **dadurch gekennzeichnet, dass** Schritt c) das Berechnen der Spannung auf der Sekundärseite (19) eines oder mehr der gewählten Verteilungstransformatoren (13) oder das Erfassen von Messwerten aus der Messeinrichtung (22) für eine Spannungsmessung, auf der Sekundärseite (19) des einen oder mehr der gewählten Verteilungstransformatoren (13) angeordnet, beinhaltet.

4. Verfahren nach Anspruch 1, **dadurch gekennzeichnet, dass** Schritt d) das Berechnen der Abweichung zwischen gewünschter Spannung und gemessener Spannung auf der Sekundärseite (19) des/der gewählten Verteilungstransformators/-transformatoren (13) und das Berechnen einer Einstellspannung für den Leistungstransformator (11) zum Erreichen einer gewünschten Spannung auf der Sekundärseite des/der gewählten Verteilungstransformators/-transformatoren (13) beinhaltet.

5. System zur Spannungsregelung in einem Versorgungsnetz mit mindestens einem Leistungstransformator (11), Verteilungsleitungen (12), Schaltern (14, 15) und Verteilungstransformatoren (13), in dem eine Messeinrichtung (22) auf der Sekundärseite (19) des mindestens einen gewählten Verteilungstransformators (13) zum Messen von Spannung angeordnet ist, und einer Steuereinheit (20), die mit einer Spannungsregelungsfunktion zum Regeln des Leistungstransformators (11) versehen ist, damit eine gewünschte Spannung auf der Sekundärseite (19) des/der gewählten Verteilungstransformators/-transformatoren (13) erreicht wird, **dadurch gekennzeichnet, dass**:

   - die Messeinrichtung (22) in Verbindung mit dem/den Verteilungstransformator(en) (13) mit der höchsten Spannung auf der Sekundärseite (19) während des Betriebs angeordnet ist,
   - die Steuereinheit (20) für das Berechnen der Spannung auf der Sekundärseite (19) eines oder mehr der gewählten Verteilungstransformatoren (13) oder das Erfassen von Messwerten aus der Messeinrichtung (22) für eine Spannungsmessung, auf der Sekundärseite (19) des einen oder mehr der gewählten Verteilungstransformatoren (13) angeordnet, angeordnet ist und
   - die Steuereinheit (20) für das Berechnen der Abweichung zwischen gewünschter Spannung und gemessener Spannung auf der Sekundärseite (19) des/der gewählten Verteilungstransformators/-transformatoren (13) und das Berechnen einer Einstellspannung für den Leistungstransformator (11), um eine gewünschte Spannung auf der Sekundärseite (19) des/der gewählten Verteilungstransformators/-transformatoren (13) zu erreichen, angeordnet ist.

6. System nach Anspruch 5, **dadurch gekennzeichnet, dass** die Steuereinheit (20) angeordnet ist, um den Zustand des Versorgungsnetzes zu prüfen, hierin enthalten das Prüfen, ob Verriegelungen vorhanden sind, die die Spannungsregelung blockieren, oder ob sonstige Fehlerzustände im Versorgungsnetz vorliegen.

7. System nach Anspruch 5, **dadurch gekennzeichnet, dass** das System über Einrichtungen zum Protokollieren von Daten und Zuständen einschließlich aller Regelungen, interner Informationen/Ereignisse und Messwerte, Sollwerte und/oder Spannungspegel verfügt.

8. System nach Anspruch 5, **dadurch gekennzeichnet, dass** das System über eine Schnittstelle, entweder als eine separate Schnittstelle oder als eine in andere Schnittstellen, die zum Beispiel mit Steuerzentralen (21) in Verbindung stehen, integrierte Schnittstelle, verfügt.

9. System nach Anspruch 5, **dadurch gekennzeichnet, dass** die Steuereinheit (20) angeordnet ist, um ein Stufenschaltwerk des Leistungstransformators (11) zum Regeln der Spannung auf der Sekundärseite (18) des Leistungstransformators (11) zu steuern.

10. System nach Anspruch 5, **dadurch gekennzeichnet, dass** die Steuereinheit (20) und die Messeinrichtung (22) für interne Kommunikation, entweder direkt oder über eine Steuerzentrale (21), angeordnet sind.

**Revendications**

1. Procédé pour réguler la tension dans un réseau de distribution comprenant au moins un transformateur de puissance (11), des lignes de distribution (12), des commutateurs (14, 15) et des transformateurs de distribution (13), **caractérisé en ce que** le procédé comprend les étapes suivantes :

   a) le contrôle de l'état du réseau de distribution,
   b) la réalisation d'une analyse détaillée du réseau de distribution pour chaque transformateur de distribution (13) pour trouver le ou les transformateur(s) de distribution (13), connecté(s) au transformateur de puissance (11), qui présente la tension la plus élevée sur le secondaire (19) du transformateur de distribution (13) durant le fonctionnement,
   c) le calcul de la tension ou l'acquisition de mesures de tension à partir du secondaire (19) du ou des transformateur(s) de distribution sélectionné(s) (13),
   d) le calcul de l'écart entre la tension souhaitée et la tension mesurée sur le secondaire (19) du ou des transformateur(s) de distribution sélectionné(s) (13), et des réglages pour le transformateur de puissance (11),

e) la régulation du transformateur de puissance (11) pour que la tension souhaitée sur le secondaire (19) du ou des transformateur(s) de distribution sélectionné(s) (13) soit obtenue,

f) la répétition des étapes a)-e) à des intervalles prédéfinis.

2. Procédé selon la revendication 1, **caractérisé en ce que** l'étape a) comprend le contrôle s'il y a des verrouillages bloquant la régulation de tension ou s'il y a d'autres états d'erreur dans le réseau de distribution.

3. Procédé selon la revendication 1, **caractérisé en ce que** l'étape c) comprend le calcul de la tension sur le secondaire (19) d'un ou de plusieurs transformateurs de distribution choisis (13) ou l'acquisition de valeurs de mesure à partir de moyens de mesure (22), pour la mesure de tension, agencés sur le secondaire (19) d'un ou de plusieurs transformateurs de distribution choisis (13).

4. Procédé selon la revendication 1, **caractérisé en ce que** l'étape d) comprend le calcul de l'écart entre la tension souhaitée et la tension mesurée sur le secondaire (19) du ou des transformateur(s) de distribution sélectionné(s) (13), et le calcul de la tension de consigne pour le transformateur de puissance (11) pour obtenir la tension souhaitée sur le secondaire du ou des transformateur(s) de distribution sélectionné(s) (13).

5. Système pour réguler la tension dans un réseau de distribution comprenant au moins un transformateur de puissance (11), des lignes de distribution (12), des commutateurs (14, 15) et des transformateurs de distribution (13), où des moyens de mesure (22) sont agencés sur le secondaire (19) d'au moins un transformateur de distribution choisi (13) pour lire la tension, et une unité de commande (20) pourvue d'une fonction de régulation de tension pour réguler le transformateur de puissance (11) pour que la tension souhaitée soit obtenue sur le secondaire (19) du ou des transformateur(s) de distribution sélectionné(s) (13), **caractérisé en ce que** :

- les moyens de mesure (22) sont agencés en association avec le ou les transformateur(s) de distribution (13) présentant la tension la plus élevée sur le secondaire (19) durant le fonctionnement,

- l'unité de commande (20) est agencée pour calculer la tension sur le secondaire (19) d'un ou de plusieurs transformateurs de distribution choisis (13) ou acquérir des valeurs de mesure à partir des moyens de mesure (22), pour la mesure de tension, agencés sur le secondaire (19) d'un ou de plusieurs transformateurs de distribution choisis (13), et

- l'unité de commande (20) est agencée pour calculer l'écart entre la tension souhaitée et la tension mesurée sur le secondaire (19) du ou des transformateur(s) de distribution sélectionné(s) (13), et calculer la tension de consigne pour le transformateur de puissance (11) pour obtenir la tension souhaitée sur le secondaire (19) du ou des transformateur(s) de distribution sélectionné(s) (13).

6. Système selon la revendication 5, **caractérisé en ce que** l'unité de commande (20) est agencée pour contrôler l'état du réseau de distribution, y compris le contrôle s'il y a des verrouillages bloquant la régulation de tension ou s'il y a d'autres états d'erreur dans le réseau de distribution.

7. Système selon la revendication 5, **caractérisé en ce que** le système comprend des moyens pour enregistrer des données et des états, y compris la totalité des régulations, des informations/événements internes, et des valeurs de mesure, des valeurs de consigne et/ou des niveaux de tension.

8. Système selon la revendication 5, **caractérisé en ce que** le système comprend une interface, sous forme d'interface séparée ou d'interface intégrée dans d'autres interfaces existant en association avec, par exemple, des centres de commande (21).

9. Système selon la revendication 5, **caractérisé en ce que** l'unité de commande (20) est agencée pour commander un changeur de prises du transformateur de puissance (11) pour réguler la tension sur le secondaire (18) du transformateur de puissance (11).

10. Système selon la revendication 5, **caractérisé en ce que** l'unité de commande (20) et les moyens de mesure (22) sont agencés pour la communication interne, directement ou par l'intermédiaire d'un centre de commande (21).

**Figure 1.**

**Figure 2.**

Figure 3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101604843 A
- US 2009265042 A
- JP 2008228428 A
- US 20100191389 A1